Europäisches Patentamt

European Patent Office

Office européen des brevets

(19)

(11) Numéro de publication: **0 014 610**

**A1**

(12)

# DEMANDE DE BREVET EUROPEEN

(21) Numéro de dépôt: **80400062.8**

(22) Date de dépôt: **15.01.80**

(51) Int. Cl.³: **G 02 B 5/14**

(30) Priorité: **13.02.79 FR 7903638**

(43) Date de publication de la demande:
**20.08.80 Bulletin 80/17**

(84) Etats Contractants Désignés:
**BE DE GB IT NL SE**

(71) Demandeur: **"THOMSON-CSF"- SCPI
173, Boulevard Haussmann
F-75360 Paris Cedex 08(FR)**

(72) Inventeur: **Jacques, André
"THOMSON-CSF" - SCPI 173, Bld Haussmann
F-75360 Paris Cedex 08(FR)**

(72) Inventeur: **Le Guen, Benoit
"THOMSON-CSF" - SCPI 713, bld Haussmann
F-75360 Paris Cedex 08(FR)**

(72) Inventeur: **Moronvalle, Chantal
"THOMSON-CSF" - SCPI 713, bld Haussmann
F-75360 Paris Cedex 08(FR)**

(74) Mandataire: **Wang, Pierre et al,
"THOMSON-CSF" - SCPI 173, bld. Haussmann
F-75360 Paris Cedex 08(FR)**

(54) **Dispositif de connexion détachable pour fibres optiques.**

(57) Dispositif de connexion détachable pour fibres optiques dans lequel l'une des parties détachables du dispositif de connexion est confondue avec un boitier formant le corps d'un connecteur (100) doté d'une structure de révolution et traversée selon l'axe de révolution (Δ) de cette structure par une fibre optique (101), couplée à la zone active d'un organe opto-électronique (103). Le corps du connecteur (100) et l'organe opto-électronique (103) sont eux-mêmes solidaires d'un support de connecteur (105). Ce support de connecteur (105) possède des moyens de fixation (112) permettant de le fixer sur un chassis (110) selon deux variantes.
Application aux transmissions opto-électroniques.

./...

Croydon Printing Company Ltd.

$FIG. 3$

1

# DISPOSITIF DE CONNEXION DETACHABLE POUR FIBRES OPTIQUES

La présente invention se rapporte aux dispositifs destinés à établir une connexion optique détachable entre des organes de transmission de rayonnement en forme de cable se terminant par des embouts cylindriques et renfermant une fibre optique ou un faisceau de fibres optiques. De tels dispositifs ont été décrits par exemple dans la demande de brevet français déposée le 14 janvier 1976 sous le numéro 76 00 886 et publiée sous le numéro 2.338.500.

Dans cette demande de brevet, il est décrit un dispositif de connexion détachable destiné à réunir deux à deux des embouts cylindriques de diamètre prédéterminé qui constituent les terminaisons d'organes de transmission à fibres optiques, le dispositif comprenant au moins un manchon de liaison muni d'une fente longitudinale dont le volume est délimité pour la partie latérale intérieure par un alésage cylindrique de diamètre n'excédant pas le diamètre prédéterminé et pour la paroi latérale extérieure par une surface de révolution comportant deux portées tronconiques opposées ayant le même axe que l'alésage ; les portées et la fente étant agencées de telle façon que la section droite du manchon épouse la forme d'un anneau ouvert dont le diamètre extérieur décroit du milieu vers les extrémités du manchon ; le dispositif comprenant en outre un boîtier muni d'au moins un alésage cylindrique contenant deux bagues annulaires coulissantes centrées par l'alésage et dont les portées coniques intérieures s'appliquent respectivement sur les portées tronconiques du manchon, un capuchon destiné à coiffer le boitier et des moyens de serrage du capuchon sur le boitier ; les fonds du boitier et du capuchon étant munis de passages pour les embouts ; les bords des passages commandant sous l'action

2

des moyens de serrage le rapprochement des bagues annulaires coulissantes et de ce fait la compression du manchon.

L'objet de la présente invention est de proposer un dispositif de connexion particulièrement adapté à coupler un circuit optoélectronique, émetteur ou récepteur, à un cable comprenant des fibres optiques.

Le procédé de connexion retenu dans la demande de brevet précitée est conservé : en particulier un manchon fendu, élastique à deux portées coniques en opposition, reçoit deux parties détachables contenant les fibres à relier. La différence essentielle réside dans le fait que l'une de ces parties est constituée par le corps d'un connecteur se substituant au boitier de la demande de brevet précitée et comprenant une monofibre couplée à la zone active d'un circuit opto-électronique. Ce circuit opto-électronique peut être par exemple une diode électroluminescente ou une photodiode.

La présente invention a donc pour objet un dispositif de connexion détachable destiné à réunir deux à deux des embouts cylindriques de diamètre prédéterminé qui constituent les terminaisons d'organes de transmission à fibres optiques, dispositif comprenant au moins un manchon de liaison muni d'une fente longitudinale dont le volume est délimité pour la paroi latérale intérieure par un alésage cylindrique de diamètre n'excédant pas le diamètre prédéterminé et pour la paroi latérale extérieure par une surface de révolution comportant deux portées tronconiques opposées ayant le même axe que l'alésage ; les portées et la fente étant agencées de façon que la section droite du manchon épouse la forme d'un anneau ouvert dont le diamètre extérieur décroit au milieu vers les extrémités du manchon ; dispositif comprenant un boitier muni d'au moins un alésage cylindrique contenant deux bagues annulaires coulissantes centrées par l'alésage et dont les portées coniques intérieures s'appliquent respectivement sur les portées tronconiques du manchon, un capuchon mobile destiné
à coiffer ledit boitier et des moyens de serrage du
capuchon mobile sur le boitier ; le fond du capuchon
mobile étant muni d'un passage pour l'un des embouts ;
les bords du passage commandant sous l'action des moyens
de serrage le rapprochement des bagues annulaires coulissantes et de ce fait la compression du manchon ;
dispositif principalement caractérisé en ce que l'autre
embout est solidaire du boitier dans lequel coulisse
le manchon de liaison ; cet embout ayant une structure
de révolution et étant traversé selon l'axe de révolution
de cette structure  par une fibre optique, couplée à
la zone active d'un organe opto-électronique également
solidaire du boitier.

L'invention sera mieux comprise à l'aide de la
description ci-après et des figures annexées parmi
lesquelles :

- les figures 1 et 2 illustrent un dispositif de
connexion détachable selon l'art connu ;

- la figure 3 est une vue en coupe d'un dispositif
de connexion selon une première variante de l'invention ;

- la figure 4 est une vue en coupe d'un dispositif
de connexion selon une seconde variante de l'invention ;

- les figures 5 et 6 sont des vues en perspective
des dispositifs de connexion des figures 3 et 4.

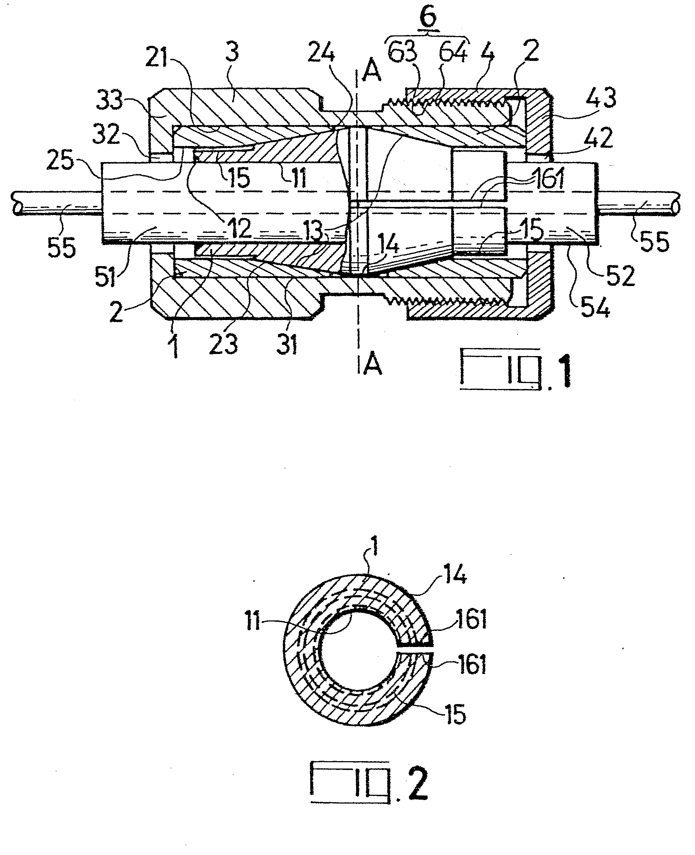

La figure 1 représente une vue en coupe partielle
d'un dispositif de connexion selon l'art connu illustré
par la demande de brevet français précitée. Ce dispositif
est destiné à réunir deux embouts cylindriques 51 et 52
faisant partie d'organes de transmission du rayonnement
à fibres optiques. Ainsi qu'il est connu, le rayonnement
est guidé par réflexion totale à l'intérieur d'une fibre
réfringente unique ou d'un faisceau de telles fibres.
Une gaine protectrice 55 entoure généralement la fibre
ou le faisceau de fibres. Chaque embout est constitué
par une pièce cylindrique creuse dont la face terminale
plane perpendiculaire à l'axe longitudinal renferme une

4

zone centrale circulaire où vient affleurer la terminaison de la fibre unique ou du faisceau de fibres. L'assemblage de l'embout, du guide de rayonnement et de sa gaine de protection est réalisé de telle façon que la paroi latérale cylindrique de l'embout soit exactement centrée par rapport à la zone circulaire d'où émerge le rayonnement lumineux transmis.

Ainsi, le centrage des zones réfringentes est obtenu lorsque les parois latérales cylindriques des deux embouts sont elles-mêmes centrées. L'alignement et le contact intime des zones réfringentes peut avoir lieu dès que les parois latérales cylindriques de deux embouts sont rendues coaxiales.

Le dispositif de connexion des embouts comprend un manchon 1 réalisé en matériau élastique ; l'alésage interne du manchon 1 définit une surface intérieur 11 cylindrique en l'absence des embouts 51 et 52, aux extrémités de laquelle sont prévus des chanfreins 12 pour faciliter l'introduction des embouts ; la surface extérieure comporte deux portées 13 tronconiques coaxiales de l'alésage et disposées en opposition, ayant de préférence la même conicité, et deux surfaces 15 annulaires situées aux extrémités telles que les longueurs suivant l'axe des portées 13 soient limitées ; une surface 14 située entre les deux portées 13 peut être prévue, afin de servir lors du serrage à limiter l'extension radiale du manchon 1. Le dispositif comprend en outre deux bagues 2 à symétrie de révolution axiale réalisée en matériau plus rigide que le matériau du manchon 1. Les surfaces intérieures des bagues comportent une portée conique 23 et une zone cylindrique 25 limitant l'extension longitudinale de cette portée 23. Les bagues viennent s'enfiler sur le manchon et les portées 13 et 23 s'adaptent les unes sur les autres. Les surfaces externes 21 des bagues coulissantes sont cylindriques. De plus, le dispositif comprend un boitier 3

5

muni d'un alésage cylindrique au diamètre extérieur des bagues 2 dont le volume est délimité par la paroi latérale intérieure 31. Au sein de ce volume sont insérés le manchon 1 et les bagues 2 enfilées sur ce manchon. En outre, le dispositif comprend un capuchon 4, destiné à coiffer le boitier 3, des moyens de serrage 6 du capuchon 4 sur le boitier 3 : les fonds du boitier 3 et du couvercle 4 sont munis de passages 32 et 42 pour les embouts 51 et 52, les bords 33 et 43 des passages 32 et 42 commandent sous l'action des moyens de serrage 6 le rapprochement des bagues 2 coulissantes donc la compression du manchon 1 et l'adaptation de son diamètre intérieur au diamètre prédéterminé des embouts par rapprochement des bords 161 de la fente longitudinale réalisée dans le manchon, ainsi que l'alignement et la fixation des embouts. Pour permettre un bon débattement des bagues, le matériau de celles-ci voisinant l'arête formée par les surfaces 21 et 23 est supprimée laissant un espace vide 24. Dans le cas de la figure 1, les moyens de serrage sont réalisés par les filetages 63 et 64 fabriqués respectivement sur le boitier 3 et le capuchon 4.

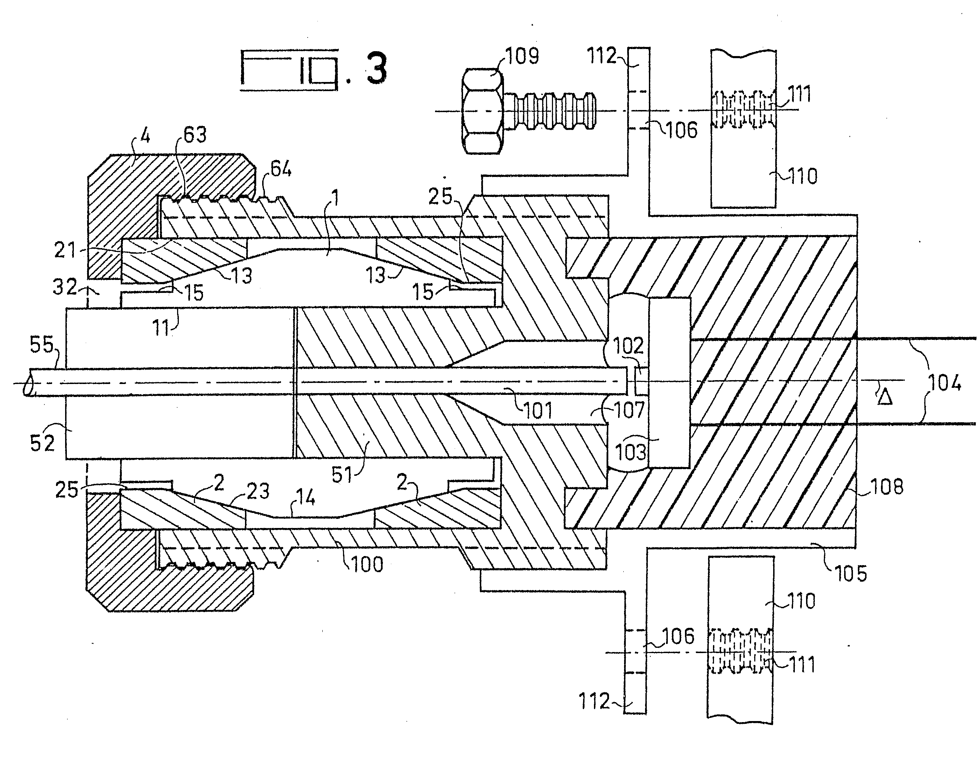

La figure 2 représente la section droite du manchon 1 selon la coupe AA de la figure 1. On reconnait la section en forme d'anneau ouvert qui permet des mouvements aisés du manchon en extension ou compression radiale.

Tout en conservant les avantages du dispositif de connexion détachable du type qui vient d'être décrit, l'invention propose un dispositif de connexion particulièrement adapté à coupler un circuit opto-électronique, émetteur ou récepteur, à un cable comprenant des fibres optiques.

La figure 3 représente une vue en coupe d'un dispositif de connexion selon une première variante de l'invention. Ce dispositif est destiné à réunir un premier embout cylindrique 52 avec un second embout 51 solidaire

6

d'un boitier formant le corps d'un connecteur 100 et faisant partie d'organes de transmission de rayonnement à fibres optiques. Une gaine protectrice 55 entoure généralement la fibre ou le faisceau de fibres. Le dispositif de connexion des embouts comprend un manchon 1 réalisé en matériau élastique ; l'alésage interne du manchon 1 définit une surface intérieure 11, cylindrique en l'absence de l'embout 52 ; la surface extérieure comporte deux portées 13 tronconiques coaxiales de l'alésage et disposées en opposition, ayant de préférence la même conicité, et deux surfaces 15 annulaires situées aux extrémités, telles que les longueurs suivant l'axe des portées 13 soient limitées ; une surface 14 située entre les deux portées 13 peut être prévue, afin de servir lors du serrage à limiter l'extension radiale du manchon 1. Le dispositif comprend en outre deux bagues 2 asymétriques de révolution axiale Δ, réalisées en matériau plus rigide que le matériau du manchon 1. Les surfaces intérieures des bagues comportent une portée conique 23 et une zone cylindrique 25 limitant l'extension longitudinale de cette portée 23. Les bagues viennent s'enfiler sur le manchon et les portées 13 et 23 s'adaptent les unes sur les autres. Les surfaces externes 21 des bagues coulissantes sont cylindriques. De plus, le dispositif comprend un capuchon mobile 4. Le fond du capuchon 4 est muni d'un passage 32 pour l'embout 52. Sur la figure 1, le corps du connecteur 100 et le capuchon 4 sont munis de moyens de serrage réalisés par les filtrages 63 et 64. Une fibre optique 101 traverse le corps du connecteur 100 selon son axe de révolution ; elle est maintenue par collage sur sa partie arrière, en 107. Le corps du connecteur 100 est inserré dans un support 105, par exemple par vissage. Ce support est muni de deux oreilles 112 percées en 106. Ces oreilles 112 permettant la fixation de l'ensemble sur un chassis 110, muni d'un filetage 111. Pour la clarté, une seule vis 109 a été représentée sur la figure 3.

7

Un ensemble opto-électronique 103, comprenant un élément actif 102, est positionné de façon optimum par rapport à la fibre optique 101. La méthode de positionnement est bien connue de l'homme de métier, elle ne sera pas décrite plus avant. Une fois ce positionnement établi, on coule une résine d'enrobage 108, dans le puits où se trouve l'ensemble opto-électronique afin de l'isoler. L'élément actif 102 peut être constitué par une diode électroluminescente ou par une photodiode ou encore par un phototransistor. Cet ensemble 102-103 communique avec l'extérieur par les liaisons électriques 104.

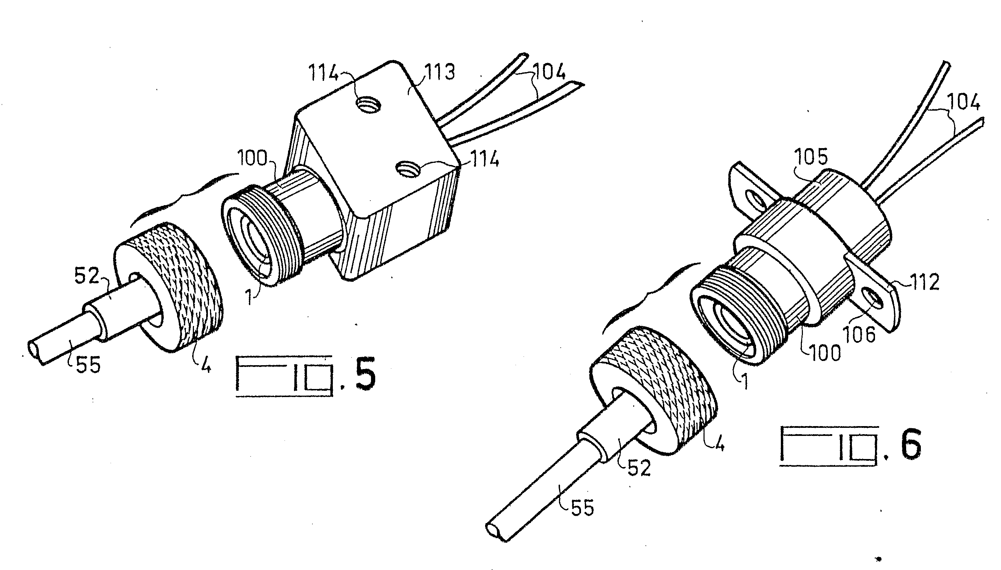

Le connecteur de la figure 3 est représenté en perspective sur la figure 5. On retrouve les principaux éléments, d'une part le corps de connecteur 100, avec son support 105, comprenant deux oreilles de fixation 112 munies d'un orifice 106. On trouve également le manchon 1 et les connexions électriques 104. On trouve d'autre part, la partie mobile composée du capuchon 4, de la fibre optique et sa protection 55, ainsi que l'embout 52.

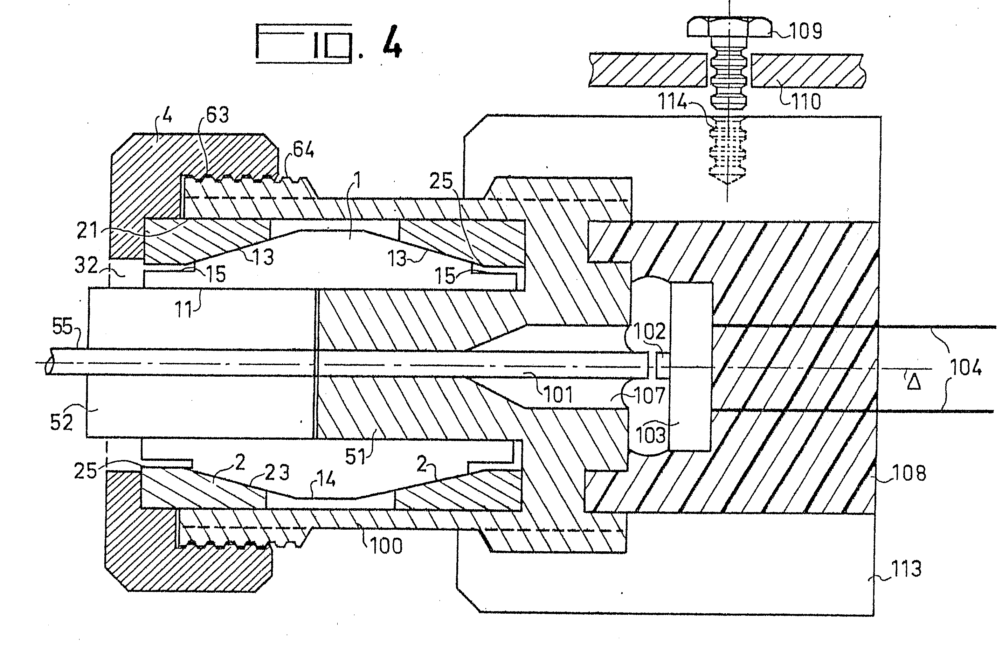

Ce mode de fixation permet une arrivée des fibres optiques selon une direction sensiblement perpendiculaire à une des parois d'un chassis. Il est particulièrement intéressant lorsque les différentes fibres optiques se présentent sous la forme d'un faisceau. Les figures 4 et 6 représentent une variante dans laquelle les fibres optiques se situent dans un plan essentiellement parallèle à l'une des parois d'un chassis. Cette variante est particulièrement intéressante lorsque les fibres optiques sont réunies en nappe. Les parties communes aux figures 3 et 5 d'une part, 4 et 6 d'autre part, portent les mêmes références et ne seront plus décrites. La différence essentielle consiste en un support de connecteur permettant une fixation à plat sur un chassis. Ce support 113 est muni de filetage 114 sur l'une de ses faces. Ces filetages permettent une fixation sur un chassis 110,

8

à l'aide par exemple de vis 109.

Ces deux réalisations, tout en conservant les avantages de la demande de brevet français précitée permettent d'intégrer dans le connecteur lui-même l'élément opto-électronique actif.

A titre d'exemple non limitatif, des dispositifs de connexion détachables réalisés selon l'invention, et représentés sur les figures 3 à 6 peuvent être réalisés comme suit :

Epaisseur maximum du manchon 1 : 1,5 mm

Diamètre intérieur de l'alésage du corps du connecteur 100 : 7,2 mm

Diamètre maximum du dispositif de connexion :: 11 mm

Largeur de la fente longitudinal rectiligne : 0,5 mm

Matériau des bagues du capuchon, du corps, du connecteur et du support : laiton

Matériau du manchon : résine acétale

L'invention n'est pas limitée aux deux réalisations qui viennent d'être décrites. Le support du dispositif de connexion selon la première variante peut notamment être doté d'une géométrie extérieure quelconque. Le support du dispositif de connexion selon la seconde réalisation doit cependant posséder au moins une face plane.Les moyens de serrage peuvent comporter les filetages, comme il a été décrit précédemment ; ces moyens peuvent également comporter des systèmes à clip, ou encore des systèmes à bayonnette.

9

## REVENDICATIONS

1. Dispositif de connexion détachable destiné à réunir deux à deux des embouts cylindriques de diamètre prédéterminé qui constituent les terminaisons d'organes de transmission à fibres optiques, dispositif comprenant au moins un manchon de liaison (1) muni d'une fente longitudinale (161) dont le volume est délimité pour la paroi latérale intérieure par un alésage cylindrique de diamètre n'excédant pas le diamètre prédéterminé et pour la paroi latérale extérieure par une surface de révolution comportant deux portées tronconiques (13) opposées ayant le même axe que l'alésage ; les portées et la fente étant agencées de façon que la section droite du manchon épouse la forme d'un anneau ouvert dont le diamètre extérieur décroit du milieu vers les extrémités du manchon ; dispositif comprenant un boitier (100) muni d'au moins un alésage cylindrique contenant deux bagues annulaires (2) coulissantes centrées par l'alésage et dont les portées coniques intérieures (23) s'appliquent respectivement sur les portées tronconiques (13) du manchon, un capuchon mobile (4) destiné à coiffer ledit boitier (100) et des moyens de serrage (63,64) du capuchon mobile (4) sur le boitier (100) ; le fond du capuchon mobile étant muni d'un passage pour l'un des embouts (52) ; les bords du passage commandant sous l'action des moyens de serrage (63, 64) le rapprochement des bagues annulaires (2) coulissantes et de ce fait la compression du manchon (11), dispositif caractérisé en ce que l'autre embout (51) est solidaire du boitier (100) dans lequel coulisse le manchon (1) de liaison ; cet embout (51) ayant une structure de révolution et étant traversé selon l'axe de révolution (Δ) de cette structure par une fibre optique (101), couplée à la zone active (102) d'un organe opto-électronique (103) également solidaire du boitier (4).

2. Dispositif selon la revendication 1, caractérisé

10

en ce que le boitier (4) est solidaire de moyens de fixation (112) qui permettent de fixer le boitier (4) sur un panneau (110), de telle façon que l'axe de révolution (Δ) soit perpendiculaire à ce panneau.

3. Dispositif selon la revendication 1, caractérisé en ce que le boitier (4) est solidaire de moyens de fixation (112) qui permettent de fixer le boitier (4) sur un panneau (110) de telle façon que l'axe de révolution (Δ) soit parallèle à ce panneau.

Fig.1

Fig.2

0014610

FIG. 3

FIG. 4

114 113 104

100

52

55 4 FIG.5

1

105

104

112

106

100

1

52

55 4 FIG.6

4/4

0014610

Office européen des brevets

**RAPPORT DE RECHERCHE EUROPEENNE**

0014610

Numéro de la demande

EP 80 40 0062

| Catégorie | Citation du document avec indication, en cas de besoin, des parties pertinentes | Revendication concernée |
|---|---|---|
| | FR - A - 2 273 289 (F.FORT) <br> * Page 2, lignes 17-22; revendications; figure 2 * | 1 |
| | -- | |
| | US - A - 4 118 105 (K.J. VOIGT) <br> * Revendications; figures * | 1 |
| | -- | |
| | US - A - 3 954 338 (G.F. HENNEL) <br> * Revendications; figures 1,2 * | 1 |
| | -- | |
| | DE - A - 2 736 460 (ELECTRIC POWER) <br> * Revendications 1,8; figures 2, 2A * | 2,3 |
| | -- | |
| A | FR - A - 2 338 500 (THOMSON) <br> * Ensemble du document * | 1 |
| | -- | |
| A | DE - A - 2 524 845 (NIPPON ELECT) <br> * Revendication 1; figure 1 * | 1 |
| | -- | |
| A | US - A - 3 803 409 (R.J.PROCHAZKA) <br> * Résumé; figures 2,4-6 * | 1 |
| | -- | |
| A | US - A - 3 704 996 (M. BORNER) <br> * Résumé; figures * | 1 |
| | ---- | |

**DOCUMENTS CONSIDERES COMME PERTINENTS**

**CLASSEMENT DE LA DEMANDE (Int. Cl. 3)**

G 02 B 5/14

**DOMAINES TECHNIQUES RECHERCHES (Int Cl. 3)**

G 02 B 5/14

**CATEGORIE DES DOCUMENTS CITES**

X: particulièrement pertinent
A: arrière-plan technologique
O: divulgation non-ecrite
P: document intercalaire
T: theorie ou principe à la base de l'invention
E: demande faisant interférence
D: document cité dans la demande
L: document cite pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 20-05-1980 | PFAHLER |

OEB Form 1503.1 06.78